# EUROPÄISCHE PATENTSCHRIFT

(11) **EP 3 244 126 B1**
(45) Veröffentlichungstag und Bekanntmachung des Hinweises auf die Patenterteilung: **03.01.2024**
(21) Anmeldenummer: 17000766.0
(22) Anmeldetag: 04.05.2017
(51) Int. Cl.: F21S 43/14, F21S 43/16, F21S 43/245, F21S 43/237, F21S 43/247, F21S 45/47, F21S 43/20, B60Q 1/00

(54) **FRONTSCHEINWERFER MIT TAGFAHRLICHT FÜR EIN KRAFTFAHRZEUG**
FRONT HEADLAMP WITH DAYTIME RUNNING LIGHTS FOR A MOTOR VEHICLE
PHARE COMPRENANT UN FEU DIURNE POUR UN VÉHICULE AUTOMOBILE

(30) Priorität: 13.05.2016 DE 102016005880
(43) Veröffentlichungstag der Anmeldung: 15.11.2017
(73) Patentinhaber: MAN Truck & Bus SE, 80995 München (DE)
(72) Erfinder: Brüchner, Nathan, 80689 München (DE)
(74) Vertreter: Liebl, Thomas

(56) Entgegenhaltungen:
- EP-A1- 2 851 718
- EP-A1- 2 985 524
- DE-A1-102012 206 970
- DE-A1-102013 016 277
- DE-A1-102014 109 114
- US-A1- 2004 100 789
- US-A1- 2005 207 153
- US-A1- 2007 086 184
- US-A1- 2015 138 807
- US-B2- 6 871 973

## Beschreibung

Die Erfindung betrifft einen Frontscheinwerfer mit Tagfahrlicht für ein Kraftfahrzeug, wie aus US2005/0207153 A1 bekannt.

Leuchtdioden sind allgemein bekannte lichtemittierende Halbleiter-Bauelemente, die bei hoher Lichtausbeute und langer Lebensdauer nur relativ wenig elektrische Energie zum Betrieb erfordern.

Allgemein bekannt sind gattungsgemäße Frontscheinwerfer mit wenigstens einer Leuchtdiode in Verbindung mit einem Lichtleiter, an dem endseitig zur Einkopplung von LED-Licht die wenigstens eine LED angeordnet ist. Der Lichtleiter ist dabei über seine gesamte Länge oder zumindest in einem Teilbereich als Leuchtbereich zur Lichtabstrahlung ausgebildet. Das LED-Licht kann in an sich bekannter Weise in den Lichtleiter ähnlich einer Glasfaserleitung eingekoppelt und in diesem aufgrund von totaler Reflexion erforderlichenfalls geführt werden. In einem Teilbereich als Leuchtbereich kann mit einer Prismenoptik die Totalreflexion aufgehoben werden, so dass Licht aus dem Lichtleiter, beispielsweise einem stabförmigen Lichtleiter austritt.

In einigen Ländern besteht eine Empfehlung und in anderen Ländern eine Vorschrift ein Kraftfahrzeug bei Tageslicht mit einem sogenannten Tagfahrlicht zu betreiben. Moderne Fahrzeuge sind dazu zusätzlich zu einem Abblendlicht und einem Fernlicht mit einem solchen Tagfahrlicht ausgerüstet, welches üblicherweise als Band jeweils in den beiden Frontscheinwerfern mittels energieverbrauchsgünstigen LED's realisiert ist:
In einer allgemein bekannten Ausführungsform ist jeweils ein solches Leuchtband durch nebeneinander angeordnete Einzel-LED's hergestellt, wobei diese weißes Licht abstrahlen.

In einer bekannten, hier relevanten zweiten Ausführungsform ist ein solches Lichtband für ein Tagfahrlicht mittels eines Lichtleiters hergestellt, an dem endseitig LED-Licht eingekoppelt wird. Da für das Tagfahrlicht weißes Licht erforderlich ist, wird nach dem Stand der Technik in den Lichtleiter weißes LED-Licht eingekoppelt. In einem Scheinwerfergehäuse eines Frontscheinwerfers ist dazu in der Lichtabstrahlrichtung nach dem Lichtleiter eine sogenannte Lichtscheibe angeordnet, durch die das weiße, vom Lichtleiter abgestrahlte Licht geführt wird und durch das Scheinwerfer-Frontglas austritt. Das weiße, in den Lichtleiter eingekoppelte LED-Licht wird durch eine "weiße" LED abgegeben, indem in an sich bekannter Weise eine blaue LED mit einem fotolumineszierenden Farbstoff, als Leuchtstoff dergestalt kombiniert wird, dass blaues, im Wesentlichen monochromatisches LED-Licht in langwelligeres Licht entsprechend einem weißen Licht umgewandelt wird.

Die vorstehende Einkopplung von bereits "weißem" LED-Licht in den Lichtleiter führt nachteilig dazu, dass der Lichtleiter nicht aus allen Blickrichtungen als homogenstrahlender Lichtkörper wahrgenommen wird. Insbesondere treten bei schräger Betrachtung verstärkt Inhomogenitäten bei der Lichtabstrahlung durch Halterungen für den Lichtleiter im Scheinwerfergehäuse, wie Klipse oder Klammern auf. Zudem verhält sich unterschiedlich farbiges Licht mit unterschiedlichen Wellenlängen, das als Mischung im weißen Licht in den Lichtleiter eingekoppelt wird, über dessen Länge geringfügig anders, so dass über dessen Länge optisch störende Farbverläufe auftreten können, die ein gewünschtes homogenes weißes Erscheinungsbild des Tagfahrlichts beeinträchtigen.

Aufgabe der Erfindung ist es, einen Frontscheinwerfer mit Tagfahrlicht für ein Kraftfahrzeug, so weiterzubilden, dass eine sehr homogene Lichtabstrahlung realisierbar ist.

Diese Aufgabe wird gelöst durch die Merkmale der unabhängigen Patentansprüche. Bevorzugte Weiterbildungen sind in den Unteransprüchen offenbart.

Gemäß Patentanspruch 1 wird ein Frontscheinwerfer mit Tagfahrlicht für ein Kraftfahrzeug vorgeschlagen, mit einem Lichtleiter, an dem endseitig zur Einkoppelung von LED-Licht wenigstens eine Leuchtdiode (LED) angeordnet ist, wobei der Lichtleiter über seine Länge zumindest in einem Teilbereich als Leuchtbereich zur Lichtabstrahlung ausgebildet ist. Erfindungsgemäß ist die wenigstens eine LED, deren LED-Licht in den Lichtleiter eingekoppelt wird, durch eine blaue LED zur Abstrahlung von blauem, im Wesentlichen monochromatischen LED-Licht gebildet. Zudem ist in einer vorbestimmten Abstrahlrichtung, insbesondere mit einem definierten Abstand von dem Lichtleiter beabstandet, vor dem Lichtleiter eine Lichtscheibe angeordnet, die mit einem Leuchtstoff als Phosphorkonverter zur Umwandlung des blauen LED-Lichts in homogenes weißes Licht beschichtet ist.

Damit wird die Konvertierung von blauem LED-Licht in weißes Licht über den gesamten Leuchtbereich des Lichtleiters durchgeführt, wodurch ein aus jeder Richtung homogen erscheinender Lichtkörper realisierbar ist. Insbesondere werden Inhomogenitäten in der Lichtabstrahlung durch Halterungen, wie Klipse oder Klammern für den Lichtleiter, eliminiert. Zudem treten keine Probleme mit Farbverläufen über die Länge des Lichtleiters auf. Weiter entsteht auch ein Leuchteffekt bei Tageslicht durch Sonneneinstrahlung, wodurch die Lichtscheibe zum Leuchten angeregt wird, wodurch das Tagesdesign unterstützt wird.

Besonders bevorzugt und vorteilhaft ist die erfindungsgemäße Anordnung im Frontscheinwerfer eines Kraftfahrzeugs verwendbar, wobei in einem Scheinwerfergehäuse, in dem Leuchtmittel für ein Abblendlicht und ein Fernlicht enthalten sind, zudem eine blaue LED mit einem Lichtleiter und der vorgesetzten beschichteten Lichtscheibe als Tagfahrlicht enthalten sind. Das Scheinwerfergehäuse ist dabei in an sich bekannter Weise in der Lichtabstrahlrichtung mit einem Frontglas abgedeckt und geschlossen.

Der Lichtleiter kann dabei mittels Halteelementen, insbesondere durch Klipse oder Klammern im Scheinwerfergehäuse befestigt werden, welche nicht mehr als Inhomogenitäten des abgestrahlten Lichts wahrnehmbar sind.

Der Lichtleiter für ein Tagfahrlicht kann in an sich bekannter Weise langgestreckt mit geometrisch gebogenen Formen im Scheinwerfergehäuse aufgenommen sein.

Vorstehend ist die Anordnung mit einer Leuchtstoffbeschichtung auf der Lichtscheibe für eine Konversion des blauen LED-Lichts in homogenes weißes Licht beschrieben und beansprucht. Ein Leuchtstoff für eine solche Konversion ist allgemein bekannter Stand der Technik und auf dem Markt erhältlich. Ausdrücklich soll durch Variation der Leuchtstoffbeschichtung auf der Lichtscheibe zusätzliche oder anstelle einer weißen Lichtfunktion auch eine farbige oder mehrfarbige Lichtfunktionen umfasst und beansprucht sein. Leuchtstoffe für entsprechende farbige Konversionen sind ebenfalls allgemein bekannt und auf dem Markt erhältlich. Auch mit solchen Leuchtstoffbeschichtungen für farbige Lichtfunktionen werden die Vorteile für ein homogenes Erscheinungsbild des Lichtkörpers erhalten.

Die für die Einkopplung von blauem LED-Licht verwendbare blaue LED besteht nach einem allgemein bekannten Stand der Technik aus einem Kühlkörper und einer Platine mit einem darauf angeordneten, blaues lichtemittierenden Halbleiterbauelement.

Anhand einer Zeichnung wird die Erfindung weiter beispielhaft erläutert.

Es zeigen:
- Fig. 1: eine schematische, perspektivische Darstellung eines Frontscheinwerfers mit einem Tagfahrlicht für ein Kraftfahrzeug,
- Fig. 2: eine schematische Anordnung des Tagfahrlichts, und
- Fig. 3: einen schematischen Schnitt entlang der Schnittebene A-A aus Fig. 2

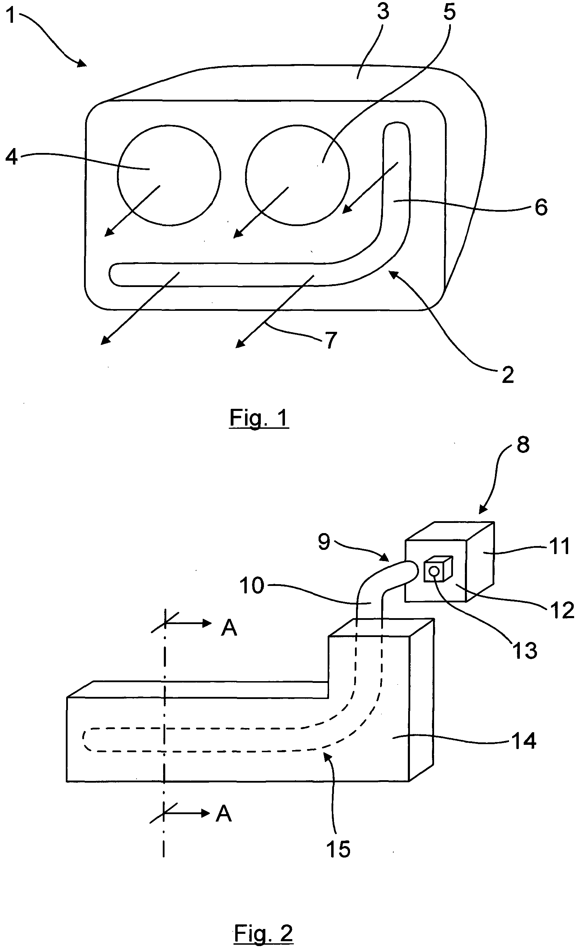

In Fig. 1 ist beispielhaft und schematisch ein Frontscheinwerfer 1 mit einem Tagfahrlicht 2 für ein Kraftfahrzeug dargestellt. Der Frontscheinwerfer 1 weist ein Scheinwerfergehäuse 3 auf mit Leuchtelementen für ein Abblendlicht 4 und ein Fernlicht 5. Das Tagfahrlicht 2 ist als bogenförmiges Lichtband 6 ausgebildet, welches sich mit einem unteren Lichtschenkel unter dem Abblendlicht 4 und dem Fernlicht 5 und mit einem seitlichen Lichtschenkel neben dem Fernlicht 5 erstreckt. Mit Pfeilen 7 ist die Hauptlichtabstrahlrichtung des Frontscheinwerfers 1 in eine Vorausrichtung eines Kraftfahrzeugs in eingebautem Zustand des Frontscheinwerfers 1 angegeben.

In Fig. 2 ist schematisch der Aufbau und die Anordnung des Tagfahrlichts 2 dargestellt: von einer blauen LED 8 wird an einem Ende 9 eines Lichtleiters 10 blaues LED-Licht in den Lichtleiter 10 eingekoppelt. Die blaue LED 8 besteht dabei in üblicher Weise aus einem Kühlkörper 11 einer Platine 12 und einem darauf angeordneten, das blaue Licht emittierenden Halbleiter-Bauelement 13.

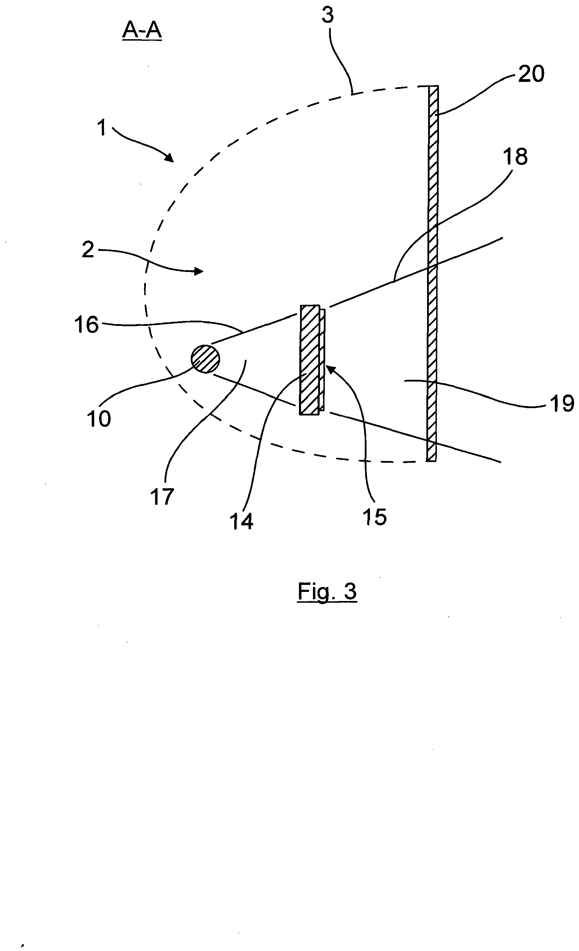

In Abstrahlrichtung (Pfeile 7) ist vor dem Lichtleiter 10 eine Lichtscheibe 14 angeordnet, die auf der Frontseite (wie aus Fig. 3 detailliert ersichtlich) eine Leuchtstoffbeschichtung als Phosphorkonverter zur Umwandlung des blauen LED-Lichts aus dem Lichtleiter 10 in homogenes weißes Licht trägt.

Zur Verdeutlichung ist dazu der Schnitt entlang der Schnittebene A-A von Fig. 2 in Fig. 3 dargestellt:
In Fig. 3 ist schematisch strichliert ein Schnitt durch das Scheinwerfergehäuse 3 gezeigt mit der Anordnung des Tagfahrlichts 2 bestehend aus dem Lichtleiter 10 und der vorgesetzten Lichtscheibe 14, die frontseitig mit der Leuchtstoffbeschichtung 15 als Phosphorkonverter beschichtet ist. Damit liegt im eingezeichneten Lichtkegel 16 blaues Licht 17 und nach der Leuchtstoffbeschichtung 15 im Lichtkegel 18 weißes Licht 19 als homogenes Licht vor, das durch das Scheinwerferfrontglas 20 aus dem Scheinwerfer 1 austritt.

### Bezugszeichenliste

- 1: Frontscheinwerfer
- 2: Tagfahrlicht
- 3: Scheinwerfergehäuse
- 4: Abblendlicht
- 5: Fernlicht
- 6: Lichtband
- 7: Pfeil
- 8: blaue LED
- 9: Ende
- 10: Lichtleiter
- 11: Kühlkörper
- 12: Platine
- 13: Halbleiter-Bauelement
- 14: Lichtscheibe
- 15: Leuchtstoffbeschichtung
- 16: Lichtkegel
- 17: blaues Licht
- 18: Lichtkegel
- 19: weißes Licht
- 20: Scheinwerferfrontglas

## Patentansprüche

1. Frontscheinwerfer mit Tagfahrlicht für ein Kraftfahrzeug,
mit einem Lichtleiter (10) an dem endseitig zur Einkoppelung von LED-Licht wenigstens eine Leuchtdiode (LED) angeordnet ist und der Lichtleiter (10) über seine Länge zumindest in einem Teilbereich als Leuchtbereich zur Lichtabstrahlung ausgebildet ist,
wobei die wenigstens eine Leuchtdiode eine blaue LED (8) zur Abstrahlung von blauem LED-Licht (17) ist, **dadurch gekennzeichnet, dass**
in einer vorbestimmten Abstrahlrichtung (7) des Frontscheinwerfers vor dem Lichtleiter (10) eine Lichtscheibe (14) angeordnet ist, die mit einem Leuchtstoff (15) als Phosphorkonverter zur Umwandlung des blauen LED-Lichts (17) in homogenes weißes Licht (19) als Tagfahrlicht beschichtet ist.

2. Frontscheinwerfer nach Anspruch 1, **dadurch gekennzeichnet,**
**dass** der Frontscheinwerfer ein Scheinwerfergehäuse (3) aufweist, in dem Leuchtmittel für ein Abblendlicht (4) und ein Fernlicht (5) sowie die blaue LED (8) mit dem Lichtleiter (10) und der vorgesetzten, beschichteten Lichtscheibe (14) als Tagfahrlicht (2) enthalten sind, und
**dass** das Scheinwerfergehäuse (3) in der Lichtabstrahlrichtung (Pfeile 7) mit einem Frontglas (20) abgedeckt und geschlossen ist.

3. Frontscheinwerfer nach Anspruch 2, **dadurch gekennzeichnet, dass** der Lichtleiter (10) mittels wenigstens eines Halteelements im Scheinwerfergehäuse (3) befestigt ist.

4. Frontscheinwerfer nach Anspruch 2 oder Anspruch 3, **dadurch gekennzeichnet, dass** der Lichtleiter (10) langgestreckt, insbesondere mit geometrisch gebogenen Formen, im Scheinwerfergehäuse (3) aufgenommen ist.

5. Frontscheinwerfer nach einem der Ansprüche 1 bis 4, **dadurch gekennzeichnet, dass** durch Variation der Leuchtstoffbeschichtung (15) auf der Lichtscheibe (14) zusätzlich oder an Stelle einer weißen Lichtfunktion farbige Lichtfunktionen realisierbar sind.

6. Frontscheinwerfer nach einem der Ansprüche 1 bis 5, **dadurch gekennzeichnet, dass** die blaue LED (8) einen Kühlkörper (11), eine Platine (12) und darauf angeordnet ein das blaue Licht (17) emittierendes Halbleiter-Bauelement (13) aufweist.

7. Fahrzeug, insbesondere Nutzfahrzeug, mit einem Fronscheinwerfer mit einem Tagfahrlicht nach einem der vorhergehenden Ansprüche.

## Claims

1. Front headlamp with daytime running light for a motor vehicle,
having a light guide (10) at whose end at least one light-emitting diode (LED) is arranged to couple in LED light and with the light guide (10) being embodied over its length at least in one partial region as a light-emitting region for emitting light,
wherein the at least one LED is a blue LED (8) for emitting blue LED light (17), **characterized in that** a lens (14) which is coated with a phosphor (15) as a phosphor converter for converting the blue LED light (17) to homogeneous white light (19) as daytime running light is arranged upstream of the light guide (10) in a predetermined emission direction (7).

2. Front headlamp according to Claim 1, **characterized**
**in that** the front headlamp has a headlamp housing (3) in which light-emitting means for a dipped beam (4) and a main beam (5) and also the blue LED (8) with the light guide (10) and the attached, coated lens (14) as daytime running light (2) are contained, and
**in that** the headlamp housing (3) is covered and closed in the light emission direction (arrows 7) with a front glass (20).

3. Front headlamp according to Claim 2, **characterized in that** the light guide (10) is attached in the headlamp housing (3) by means of at least one holding element.

4. Front headlamp according to Claim 2 or Claim 3, **characterized in that** the light guide (10) is held in the headlamp housing (3) in an extended form, in particular with geometrically curved shapes.

5. Front headlamp according to any of Claims 1 to 4, **characterized in that**, in addition to or in place of a white light function, colour light functions are implementable by way of varying the phosphor coating (15) on the lens (14).

6. Front headlamp according to any of Claims 1 to 5, **characterized in that** the blue LED (8) has a heatsink (11), a circuit board (12) and, arranged thereon, a semiconductor device (13) emitting the blue light (17).

7. Vehicle, in particular commercial vehicle, having a front headlamp with a daytime running light according to any of the preceding claims.

## Revendications

1. Phare avec feu de circulation diurne pour un véhicule automobile,
comprenant une fibre optique (10) au niveau de l'extrémité de laquelle est disposée au moins une diode électroluminescente (LED) pour l'injection de lumière de LED et la fibre optique (10), sur sa longueur, est configurée au moins en une zone partielle en tant que zone d'éclairage servant à l'émission de lumière, l'au moins une LED étant une LED bleue (8) destinée à émettre de la lumière de LED bleue (17),
**caractérisé en ce que**
dans une direction d'émission (7) prédéterminée, une glace de diffusion (14) est disposée devant la fibre optique (10), laquelle est revêtue d'une substance luminescente (15) en tant que convertisseur au phosphore destiné à la conversion de la lumière de LED bleue (17) en lumière blanche (19) homogène faisant office de feu de circulation diurne.

2. Phare selon la revendication 1, **caractérisé en ce**
**que** le phare possède un boîtier de phare (3) dans lequel sont contenus des moyens lumineux pour un feu de croisement (4) et un feu de route (5) ainsi que la LED bleue (8) avec la fibre optique (10) et la glace de diffusion (14) revêtue disposée à l'avant en tant que feu de circulation diurne (2), et
**que** le boîtier de phare (3) est recouvert et fermé par un verre avant (20) dans la direction d'émission de lumière (flèche 7).

3. Phare selon la revendication 2, **caractérisé en ce que** la fibre optique (10) est fixée dans le boîtier de phare (3) au moyen d'au moins un élément de maintien.

4. Phare selon la revendication 2 ou la revendication 3, **caractérisé en ce que** la fibre optique (10) est accueillie allongée longitudinalement dans le boîtier de phare (3), notamment avec des formes géométriquement courbées.

5. Phare selon l'une des revendications 1 à 4, **caractérisé en ce que** des fonctions de lumière de couleur peuvent être réalisées en plus ou à la place d'une fonction de lumière blanche en faisant varier le revêtement de substance luminescente (15) sur la glace de diffusion (14).

6. Phare selon l'une des revendications 1 à 5, **caractérisé en ce que** la LED bleue (8) possède un radiateur (11), une platine (12), disposée sur celle-ci, un composant semiconducteur (13) émettant la lumière bleue (17).

7. Véhicule, notamment véhicule utilitaire, comprenant un phare avec feu de circulation diurne selon l'une des revendications précédentes.
